# EUROPEAN PATENT SPECIFICATION

(11) **EP 4 129 930 B1**
(45) Date of publication and mention of the grant of the patent: **14.02.2024**
(21) Application number: 22197400.9
(22) Date of filing: 16.05.2016
(51) Int. Cl.: C02F 1/50, A01N 25/34, A01N 59/06, C02F 1/76, C02F 103/02, C02F 103/42

(54) **SLOW DISSOLVING HYPOCHLORITE SHAPED ARTICLE**
SICH LANGSAM AUFLÖSENDER HYPOCHLORITFORMKÖRPER
ARTICLE FORMÉ À BASE D'HYPOCHLORITE À DISSOLUTION LENTE

(30) Priority: 14.05.2015 US 201562161352 P
(43) Date of publication of application: 08.02.2023
(62) Divisional of application: 16724264.3
(73) Proprietor: Innovative Water Care, LLC, Alpharetta, GA 30004 (US)
(72) Inventor: HANI, Rahim, Alpharetta GA, 30005 (US); SWEENY, Philip Gerdon, Canton, GA, 30115 (US); AKANDE, Janet, Johns Creek, GA, 30097 (US)
(74) Representative: LKGlobal UK Ltd.

(56) References cited:
- AU-A1- 2006 220 357
- US-A- 4 355 014
- US-A1- 2011 233 145
- US-A1- 2012 301 555

## Description

### FIELD OF INVENTION

The present invention relates to a slow dissolving calcium hypochlorite shaped article for use in disinfecting water.

### BACKGROUND OF THE INVENTION

Calcium hypochlorite is known for use as a disinfecting treatment for water. Calcium hypochlorite has been used as a disinfectant for potable water, recreational water including, but not limited to, pools, spas, hot tubs, and the like, and industrial water, such as cooling towers and water used in the production of products. Calcium hypochlorite serves as a source of chlorine, which acts as a disinfectant to keep water free of water-borne pathogens and other organisms such as algae. Examples of calcium hypochlorite compositions, including tablets are found in, for example U.S. Pat. Nos. 3,793,216; 4,201,756; 4,145,306; 4,692,335; 5,164,109; and 5,753,602. In particular, U.S. Pat. Nos. 6,638,446 and 6,984,398 disclose compositions for treatment of recreational water that comprise mixtures of calcium hypochlorite and magnesium sulfate heptahydrate. U.S. Pat. No. 6,969,527 discloses compositions for treatment of recreational water that comprise mixtures of calcium hypochlorite, magnesium sulfate heptahydrate, and lime.

Trichloroisocyanuric acid (also known as 1,3,5-Trichloro-1,3,5-triazinane-2,4,6-trione; TCCA; or trichlor) is a slow dissolving (relative to calcium hypochlorite) chlorine releasing material that is often used in swimming pools and spas dues to the its ability to slowly release chlorine. Often, trichloroisocyanuric acid tablets will take 3-7 days to dissolve when placed in a pool skimmer. The actual time dissolution takes depends on various factors, including water temperature, flow rate in the skimmer and the initial size of the tablets. Trichloroisocyanuric acid reacts and dissolves slowly in the water to be treated; but as the trichloroisocyanuric acid reacts with the water to release chlorine, the trichloroisocyanuric acid also releases cyanuric acid as a by-product. Cyanuric acid is very stable and the concentration of the cyanuric acid will increase in the pool. At high cyanuric acid concentrations, normal chlorine levels can be rendered ineffective against water-borne pathogens. As a result, the level of the cyanuric acid in the pool will need to be decreased. This often requires either dilution by draining and refilling the pool with fresh water. Alternatively, another method commonly used is to add abnormally high doses of chlorine to overcome the effect of the cyanuric acid. This leads to pool water that is often unpleasant to the users of the pool.

Calcium hypochlorite is known to quickly dissolve in water, especially in the granular form. It is often used as a pool shock to increase the chlorine content in the pool. Attempts have been made in the art to slow the rate of dissolution of calcium hypochlorite in water, as is shown in U.S. Pat. Nos. 4,876,003 and 4,928,813 both issued to Casberg. Plastic sleeves were positioned around the tablet to slow down the dissolving rate of calcium hypochlorite tablets. When placed around the tablets, the tablets lasted longer, thus providing convenience in chlorinating swimming pools and other applications. However, such plastic sleeves, after use, must be removed from the skimmers, feeders and floaters for the swimming pools where they were used. This removal and discarding can be inconvenient to the pool owner. Alternatively, finely divided polyfluorinated polymer has been added to calcium hypochlorite tablets to cause the tablets to dissolve slower. See U.S. Pat. Nos. 4,865,760; 4,970,020; 5,009,806; and 5,205,961.

Conventionally, it has been suggested in the calcium hypochlorite art to use up to 10% by weight lime in calcium hypochlorite blends, which are to be tableted. While it is recognized that lime may extend the chlorine delivery time of a tablet containing calcium hypochlorite into an aqueous environment, there is no suggestion in the art to blend more than 10% lime with calcium hypochlorite. Further relevant prior art documents are AU 2006 220 357 A1, US 2012/301555 A1, US 4 355 014 A, US 2011/233145 A1.

Accordingly, there is a need in the art for a water sanitizing composition, which has the favorable dissolution (solubility) profile of trichloroisocyanuric acid, without the disadvantage of a cyanuric acid by product being released in the water being treated, or the need to remove a film material from the skimmer or chlorinating system. The present invention provides an answer to that need.

### SUMMARY OF THE INVENTION

It has been discovered that forming shaped article from a composition containing a blend containing calcium hypochlorite and greater than 10% lime, based on the total weight of the shaped article, the dissolution rate of the shaped article can be matched to that of trichloroisocyanuric acid, without the by-product cyanuric acid being released to the water being treated. Further, it has been discovered that the shaped article from the blend containing calcium hypochlorite and greater than 10% lime, based on the total weight of the shaped article, will also maintain structural integrity during dissolution in the use environment. That is, the shaped article will generally have the same shape, but reduces in size during dissolution and does not become soft or brittle during dissolution. The essential features of the invention are set out in independent claims: product claim 1, method claim 11 and method claim 14 for the manufacturing of the shaped article. Further preferred embodiments are described in dependent claims 2-10, 12-13, 15.

In one aspect, the present invention provides a slow dissolving calcium hypochlorite shaped article.

In another aspect of the present invention, provided is a shaped article containing a blend of calcium hypochlorite and lime, where the lime is present in an amount greater than 10% by weight, based on the total weight of the shaped article.

According to the present invention, the lime in the shaped article is calcium hydroxide.

In further aspect, the shaped article contains lime in at least 11% by weight of the total weight of the shaped article, typically least 12% by weight of the total weight of the shaped article. Generally, the lime will make up between 11% and 70% by weight of the total weight of the shaped article, typically, between 11% and 50% by weight of the total weight of the shaped article and more typically between 11% and 30% by weight of the total weight of the shaped article. In one particular embodiment, the lime will make up between 11% and 20% by weight of the total weight of the shaped article,

In another embodiment, the shaped article contains calcium hypochlorite which contains hydrated water in an amount up to 25% by weight, based on the total weight of the calcium hypochlorite. More typically, the calcium hypochlorite will contain hydrated water between about 5% and about 16% by weight, based on the total weight of the calcium hypochlorite.

In one particular embodiment, the shaped article contains calcium hypochlorite which contains hydrated water in and amount between about 5% and about 16% by weight, based on the total weight of the calcium hypochlorite, and the lime comprises calcium hydroxide, and the calcium hydroxide comprises between 11% and 30% by weight of the total weight of the shaped article.

In a further embodiment, the shaped article is in the form of a tablet, a brick, a briquette, a pellet or and extrusion article. The shaped article will typically be a size between 1 and 500 grams.

In another embodiment, provided is a method of treating water by contacting the water with the shaped article of one of the previous embodiments or as described herein. The shaped article may be used to treat water in a swimming pool, by placing the shaped article in a skimmer of the swimming pool. In addition, water may be treated with the shaped article by placing the shaped article in a chlorine feeder and contacting the shaped article with water within the chlorine feeder. Alternatively, the shaped article may be placed in a floating device that is placed in the water to be treated, and water is allowed to enter the floating device to contact the shaped article.

In another embodiment, provided is a method of manufacturing the shaped article according to any one of the embodiments, by blending calcium hypochlorite lime to form a blend, and compressing the blend to form a shaped article. In a further embodiment, the calcium hypochlorite and the lime are each in the form of free flowing particles.

These and other aspects will become apparent when reading the detailed description of the invention.

### DETAILED DESCRIPTION OF THE INVENTION

It has now been surprisingly found that a composition containing a blend of calcium hypochlorite and greater than 10% by weight of lime, based on the total weight of the shaped article, can be formed into a solid shaped article, where the solid shaped article which has a favorable dissolution (solubility) profile. In addition, it has been surprisingly discovered that the solid shaped article made from the composition maintains its structural integrity during use in an aqueous environment.

The term "blend", as used herein, refers to any homogeneous or near homogeneous mixture of two or more materials. The term "blend", as used herein, does not include encapsulated or layered products.

The term "hydrated" as used in conjunction with the composition of the present invention, or components thereof, refers to any substance that has a water content of at least 4% by weight. Similarly, the term "hydrate" as used in the context of a particular substance, refers to waters of hydration.

The term "shaped article" as used in the present specification and claims is intended to cover any shape or size article which is compressed from the blend containing calcium hypochlorite and lime. As used herein, the term "shaped article" does not cover loose granular materials. Typically shaped articles will include tablets, bricks, briquettes, pellets, extrusions and the like, in any shape or size. Tablets will generally be disc shaped or cylindrical in shape, but could have other shapes as well.

The term "maintains its structural integrity" as used herein, is intended to mean the ability of the shaped article to remain intact, essentially retaining its general shape and hardness in the use environment. A shaped article that becomes brittle, soft or disintegrates during use is not considered to maintain its structural integrity. A shaped article that remains hard, and retains its overall structure during use, but reduces its size due to dissolution is considered to maintain its structural integrity.

The calcium hypochlorite to be used in the shaped article of the invention can be either anhydrous or hydrated. Anhydrous calcium hypochlorite, which is commercially available, should contain at least about 60% by weight of Ca(OCl)₂. Hydrated calcium hypochlorite should contain at least about 50% by weight of Ca(OCl)₂ and have a hydrated water content ranging from about 4 to about 25% by weight, based on the weight of the calcium hypochlorite. Hydrated calcium hypochlorite can be prepared by the methods described, in U.S. Pat. Nos. 3,544,267 and 3,669,984. Commercially available hydrated calcium hypochlorite is available from Arch Chemicals, Inc. having offices in Alpharetta, Georgia under the commercial names **TURBO** SHOCK^{®}, and RAPID RATE^{®} pool chemical brand name. Commercially available calcium hypochlorite compositions generally include 5 to 16 % by weight water of hydration. Generally, commercially available calcium hypochlorite compositions contain 50-95% by weight calcium hypochlorite and other components, other than water of hydration, such as salts (sodium chloride, calcium chloride, calcium carbonate, and the like) in amounts up to 20% by weight. However, it is desirable to keep these other components to a minimum. The process used to make calcium hypochlorite may also result in lime being present in the calcium hypochlorite in amounts up to about 2-4% by weight, based on the weight of the calcium hypochlorite composition.

Blended with the calcium hypochlorite is lime. Lime in the present invention is the inactive form calcium hydroxide (Ca(OH)2). The lime is blended with the calcium hypochlorite in an amount such that the resulting composition will contain greater than 10% by weight, based on the total weight of the shaped article. As is noted above, lime may also be present in calcium hypochlorite in amounts of about 2-4% by weight, depending on the manufacturing process used to manufacture the calcium hypochlorite. In any event, if lime is present in the calcium hypochlorite used to make the composition, the lime content of the calcium hypochlorite is accounted for in the total lime content in the composition. For example, if the calcium hypochlorite contains 3% by weight lime, and 10% by weight lime is added to the calcium hypochlorite, the resulting blend will contain 12.7% by weight lime. (90% x 3% (lime in Ca(OCl)₂) + 10% lime= 12.7%).

The total content of calcium hydroxide in the composition is an amount greater than 10% by weight, generally in an amount greater than or equal to 11% by weight, greater than or equal to 12% by weight, greater than or equal to 13% by weight, greater than or equal to 14% by weight, or greater than or equal to 15% by weight based on the total weight of the shaped article. By "total lime content", it is meant added lime (lime added to the calcium hypochlorite composition) and any lime present in the calcium hypochlorite composition to which the added lime is blended. This will result in a shaped article made from the blend which has a favorable dissolution profile, which is similar to that of trichloroisocyanuric acid, without the downside of generating too much cyanuric acid in the pool. In addition, the resulting shaped article will have structural integrity. Generally, the resulting shaped article will contain lime in an amount between 11% and 70% by weight of the total weight of the shaped article. Typically, the shaped article will contain lime in an amount between 11% and 50% by weight of the total weight of the shaped article and more typically between 11% and 30% by weight of the total weight of the shaped article. In general, the shaped article, which is placed in the skimmer of a swimming pool that recirculates the water 8 hours per day at a conventional flow rate, will typically contain between a total lime content of about 11 to 20% by weight. The actual amount of lime used in the shaped article will depend on the planned end use of the shaped article. Increasing the amount of lime in the shaped article will increase the time that shaped article will release chlorine to treat the aqueous environment.

It has been further discovered that the shaped article made from the blend of calcium hypochlorite and lime, where the lime is present in an amount greater than 10% by weight of the shaped article, will result in a shaped article that maintains its integrity during use in an aqueous environment of either stagnant or circulating water. That is, the shaped articles do not crack or do not become structurally unstable. By "structurally unstable" it is meant shaped article will become soft, "mushy", forms crack or fissures, or breaks up during use. When a shaped article cracks, or loses the integrity, the surface area of the shaped article will increase, thereby causing the shaped article to dissolve a faster rate. It is further believed that these blended shaped articles are more stable with the inclusion of lime in an amount greater than 10% by weight of the blend, also resulting in an extended shelf life of the shaped articles.

The shaped articles are formed from the blend of calcium hypochlorite with lime of the present invention and may be made from granular blends of calcium hypochlorite with lime, in particular calcium hydroxide. The calcium hypochlorite and lime are blended using any known techniques. For example, tumble blenders, V-blenders, ribbon blenders and the like may be used in a batch mode to blend the composition of the calcium hypochlorite and lime. Additionally, screw augurs, conveyers, and the like may be used in a continuous mode to blend the composition. Other mixing methods can be used, but it has be found that dry blending of free flowing granules or powders of calcium hydroxide and calcium hypochlorite yields shaped articles with improved integrity and dissolution profiles. An alternative method is to blend lime with the calcium hypochlorite, where the calcium hypochlorite and lime are in a wet state, and drying the resulting mixture.

Once the blend of the calcium hypochlorite and lime is made, any conventional tableting process and equipment normally used for making calcium hypochlorite containing shaped articles may be used to manufacture the shaped articles of the present invention. Any suitable equipment that produces molded compacted products such as tablets, caplets or briquettes, or other known molded compacted products, using the blends of the present invention may be used. Any shape or size shaped article may be used. Preferred shaping equipment includes hydraulic tableting presses (such as Hydratron or Hydramet or Bipel hydraulic presses), briquetting apparatus (such as a Bepex Compactor), and the like. Any suitable dwell times and pressures may be used in operating such hydraulic presses. Specifically, these shaped articles are useful as water treatment sanitizers (e.g., in swimming pools and spas), and are especially safer to transport and store than calcium hypochlorite itself.

In addition to calcium hypochlorite and lime, other additives in amounts up to about 30% by weight of the shaped article may be blended with the calcium hypochlorite and lime. Examples include magnesium sulfate, in particular magnesium sulfate heptahydrate as a stabilizer, as described in US Patent No. 6,984,398 to Brennan et al.; water soluble zinc salts or hydrates of zinc salts as an algaecide as described in US Patent No. 8,372,291 to Mullins et al.; scale inhibiting agents such as alkali metal phosphates and residue dispersing alkali metal phosphate combination as described in US Patent No. 7,410,938 to Brennen. Other additives include pigments, dyes, binders, lubricants, color-containing salts, and the like. These additives may be pre-blended with the calcium hypochlorite and/or lime, or may be added as a separate solid in the blending process. Care should be taken, since some additives will increase the dissolution rate of the shaped article.

The shaped articles of made in accordance with the present invention may be used in a wide variety of uses, including a chlorine source for spa, swimming pools, hot tubs, toilets and other similar used where chlorine is needed to sanitize water sources. The solid calcium hypochlorite composition of the present invention can be added directly to a chlorination unit or feeder that is attached to the body of water that is sought to be chlorinated. When used in such a manner, the solid calcium hypochlorite composition dissolves and is dispersed into the body of water when it is contacted with a stream of water. Alternatively, the shaped articles composition may be used in skimmers or in a floating device (known as a 'floater') or feeders such as those used for feeding chlorinated isocyanurates to swimming pools and spas.

The shaped articles useful in this invention may typically have a mass of between about 1 gram and about 500 grams or more, typically between about 7 and 350 grams and more typically between 150 and 300 grams. The actual size of the shaped articles can be adjusted depending on the intended use of the resulting shaped articles. In one embodiment, the shaped article will be in the form of a tablet. The compressed tablet may be of a size that may be inserted readily into a skimmer or dissolving basket used with swimming pools or dissolvers used to form concentrated solutions of calcium hypochlorite. The shaped articles of the present invention will dissolve and are typically designed to dissolve in 3 to 14 days, more typically 3- 7 days, when used in swimming pools, spas and the like, but can be designed to dissolve in 28-35 day, in the case of a toilet sanitizer. It should be keep in mind that various factors affect the dissolution rate of the shaped articles, including flow rate of water over the shaped article, temperature of the water and the like. The dissolution rate may be adjusted by the amount of lime added to the calcium hypochlorite. An exemplary shape for the shaped articles of the present invention is a puck-shaped article, having a diameter between 2.54 cm to 10.16 cm (1 to 4 inches) and a thickness between 2.54 cm and 5.08 cm (1 and 2 inches). Larger or smaller shaped articles may be used as well.

The present invention is further described in detail by means of the following Examples. All parts and percentages are by weight and all temperatures are degrees Celsius unless explicitly stated otherwise.

### EXAMPLES

### Example 1

A commercial available TURBO SHOCK^{®} calcium hypochlorite composition available from Arch Chemicals, Inc., having offices in Alpharetta, Ga, is dry blended with calcium hydroxide powder (lime) in a two roll mill to form a homogenous mixture in amounts shown in Table 1. The calcium hypochlorite composition contained about 3% calcium hydroxide (lime). The resulting blends were then tableted into 15 gram tablets which were made at 15 tons and 5 seconds dwell time. Samples 2-6 are within the scope of the present invention and Sample 1 is within the general teaching of the prior art. For comparative purposes, two comparative examples, Samples 7 and 8 (not forming part of the present invention) containing 20% barium hydroxide or 20% zinc oxide, respectively, were also blended with the TURBO SHOCK^{®} calcium hypochlorite composition. Tablet initial weights, diameter, thickness are reported in Table 1.

**TABLE 1 ; whereby the diameter of the tablets is 2.54 cm (1 inch)**

| Sample # | Calcium hypochlorite composition (wt.%) | Lime (wt..%) | Total lime content (wt.%) | Other ingredient (wt. %) | Diameter (inches) | Height (mm) | Initial weight (grams) |
|---|---|---|---|---|---|---|---|
| 1 | 95% | 5% | 7.9% | - | 1 | 14 | 15.20 |
| 2 | 90% | 10% | 12.7% | - | 1 | 14 | 15.16 |
| 3 | 85% | 15% | 17.6% | - | 1 | 15 | 15.09 |
| 4 | 80% | 20% | 22.4% | - | 1 | 16 | 15.04 |
| 5 | 75% | 25% | 27.3% | - | 1 | 15 | 15.09 |
| 6 | 70% | 30% | 32.1% | - | 1 | 15 | 15.39 |
| 7 | 80% | 0% | 2.4% | Ba(OH)2 20% | 1 | 14 | 15.06 |
| 8 | 80% | 0% | 2.4% | ZnO 20% | 1 | 12 | 15.40 |

Each of the Samples 1-8 were placed in a one liter beaker containing 800 ml of water such that the tablets were vertically standing in the beaker. A magnetic stir bar was added to the beaker and stirred at the lowest setting for 24 hours. After 24 hours, each sample tablet was removed from the beaker, lightly padded dry with a paper towel and weighed. Once weighed, each sample tablet was placed back into the beaker with fresh 800 mL of water and once again stirred for another 24 hours. This was repeated for 7 days (168 hours). The recorded weights are shown in Table 2.

In addition, the integrity of the tablets were monitored visually and manually when removed from the beaker for weighing by checking the intactness and hardness of the tablets. To evaluate the intactness of each tablet, each tablet was manually pressed by hand and observed for softness or its tendency to disintegrate due to the gentle hand pressure. The textures of the surfaces of tablets were noted as well. All the tablets kept their shape until dissolved, unless otherwise noted or were found to be soft or "mushy" as noted in Table 2. The results are shown in Table 2.

**TABLE 2**

| Sample # | Initial Weight (g) | 24 hrs Weight (g) | 48 hrs Weight (g) | 72 hrs Weight (g) | 96 hrs Weight (g) | 120 hrs Weight (g) | 144 hrs Weight (g) | 168 hrs Weight (g) |
|---|---|---|---|---|---|---|---|---|
| 1 | 15.20 | 7.64 | 2.85 | disintegrated | | | | |
| 2 | 15.16 | 9.70 | 6.43 | 3.53 | disintegrated /dissolved | | | |
| 3 | 15.09 | 11.23 | 8.40 | 5.87 | 4.15 | 2.68 | 1.74 | dissolved |
| 4 | 15.04 | 12.62 | 10.63 | 8.77 | 7.58 | 6.47 | 5.54 | 4.58 |
| 5 | 15.09 | 12.02 | 9.82 | 809 | 6.83 | 5.63 | 4.61 | 3.64 |
| 6 | 15.39 | 12.53 | 10.43 | 8.68 | 7.51 | 6.36 | 5.41 | 4.41 |
| 7 | 15.06 | disintegrated | | | | | | |
| 8 | 15.40 | disintegrated | | | | | | |
| TCCA | 14.90 | 13.03 | 10.96 | 8.76 | 6.98 | 5.47 | 4.28 | 2.89 |

Discussion of the results. Samples 2, 3, 4, 5, and 6, with 12.7%, 17.6%, 22.4%, 27.3%, and 32.1% by weight calcium hydroxide, respectively, showed reduced dissolution rates, as compared to Samples 1, 7 and 8. Samples 4, 5 and 6 were comparable to TCCA (trichlorocyanuric acid) and lasted for 6-7 days. Samples 7 and 8 containing 20 wt.% barium hydroxide or 20 wt.% zinc oxide crumbled after just a few hours. Table #2 lists the weight of samples for every 24 hours. All the tablets within the scope of the invention kept their shape until dissolved. Samples 1 and 2 (tablets with 5 wt.% and 10 wt.% added calcium hydroxide) disintegrated and did not keep their hardness and broke when removed from the test beaker. Sample 2 however showed a reduced dissolution rate. It is believed that the small size of the tablet contributed a less than 4 days dissolution of Sample 2.

### Example 2

AV-blender was used to prepare a 75/25 and 80/20 (weight %) blends of calcium hypochlorite (TURBO SHOCK^{®}) and calcium hydroxide powder. A Bipel performer 70 ton press was used to prepare tablets of the above blends at 5 second dwell time. Tablets were approximately 200 grams each. The tablets were placed in a skimmer of a 37854 liter (10000 gallon) pool to check their dissolution rate. The pump for the pool was operated at 8 hours per day. The tablets were removed from the skimmer and weighed every 24 hours. Tables 3 and 4 show the weight of each tablet for duration of the study. The tablets in Table 3 were located in the same skimmer and the tablets in Table 4 were located together in a different skimmer. Tables 3 and 4 summarize the rate of dissolution/hour for each tablet.

**TABLE 3**

| **Left skimmer Tablet (L) 80/20 wt (g)** | Right Skimmer (R)Tablet 75/25 wt (g) | | Left | Right | Left | Right |
|---|---|---|---|---|---|---|
| | | Hours | %loss | %loss | Loss gr/hr | Loss gr/hr |
| **197.39** | 202.96 | 0 | | | | |
| **174.92** | 185.89 | 24 | 11.38 | 8.41 | 0.94 | 0.71 |
| **147.08** | 161.63 | 48 | 25.49 | 20.36 | 1.05 | 0.86 |
| **120.36** | 140.11 | 72 | 39.02 | 30.97 | 1.07 | 0.87 |
| **96.41** | 117.84 | 96 | 51.16 | 41.94 | 1.05 | 0.89 |
| **15.28** | 35.89 | 192 | 92.26 | 82.32 | 0.95 | 0.87 |

**TABLE 4**

| **Left skimmer Tablet (L) 80/20 wt (g)** | Right Skimmer (R)Tablet 75/25 wt (g) | | Left | Right | Left | Right |
|---|---|---|---|---|---|---|
| | | Hours | %loss | %loss | Loss gr/hr | Loss gr/hr |
| 200.23 | 197.18 | 0 | | | | |
| 177.20 | 178.27 | 24 | 11.50 | 9.59 | 0.96 | 0.79 |
| 149.07 | 153.80 | 48 | 25.95 | 22.00 | 1.07 | 0.90 |
| 124.87 | 131.08 | 72 | 37.64 | 33.52 | 1.05 | 0.92 |
| 99.95 | 108.18 | 96 | 50.08 | 45.14 | 1.04 | 0.93 |
| 15.70 | 26.45 | 192 | 92.16 | 86.59 | 0.96 | 0.89 |

As can be seen from Tables 3 and 4, the larger tablets in the pool skimmers retained their shape and continued to dissolve over a seven day period. The tablets had a low solubility and dissolved fairly uniformly over an 8 day test, thereby releasing chlorine at a fairly steady rate. In addition, the rate of dissolution is similar to that of TCCA. Further, each of the tables retained their structural integrity so that they could be removed from the skimmer and weight in a manner similar to example 1.

### Example 3

A roll mill was used to prepare blends of a calcium hypochlorite containing about 3.5% lime with 5.5% lime and 9.0% lime, based on the weight of blend. The resulting blends contained 8.8% by weight total lime and 12.2% by weight total lime, respectively. About 100 gram tablets were prepared using a press with a 5.08 cm (2 inch) die. The blends were placed in the die and 18 tons of pressure was applied with a 30 second dwell time. The tablets weights were recorded and are shown in Table 5. The tablets were placed in a skimmer of a 378 liter (100 gallon) tank to check the dissolution rate with water being circulated at a rate of 75.7 liter per minute (20 gallons per minute). Each sample tablet was removed from the skimmer, lightly padded dry with a paper towel and weighed. Once weighed, the sample was placed back into the skimmer for continued testing. The tablet weights were as shown in Table 5.

**TABLE 5**

| Tablet weight with 8.8% lime | Tablet weight with 12.2% lime | | 8.8% tablet | 12.2% table |
|---|---|---|---|---|
| | | Hours | Total %loss | Total %loss |
| 101.13 | 103.29 | 0 | - | - |
| 76.77 | 91.14 | 1 | 24.1 | 11.8 |
| 46.77 | 74.51 | 3 | 53.8 | 27.9 |
| 38.63 | 67.03 | 4 | 61.8 | 35.1 |
| 7.11 | 42.26 | 24 | 93.0 | 59.1 |

As can be seen from Table 5, lime present in the calcium hypochlorite has an additive effect to the lime which is added to the calcium hypochlorite. In addition, it can be seen that increasing the total amount of lime above 10% results in slower dissolution rates for the shaped article than those samples having less than 10% by weight lime. Surprisingly, having a total lime content in excess of 10% by weight of the shaped article results in a favorable dissolution rate.

## Claims

1. A calcium hypochlorite shaped article suitable for disinfecting water, the shaped article comprising a blend of calcium hypochlorite and calcium hydroxide, wherein the total calcium hydroxide content in the shaped article is greater than 10% by weight, based on the total weight of the shaped article.

2. The shaped article of claim 1, wherein the calcium hydroxide content in the shaped article is greater than or equal to 11% by weight, based on the total weight of the shaped article.

3. The shaped article of claims 1 or 2, wherein the calcium hydroxide content in the shaped article is from 11% to 30% by weight, based on the total weight of the shaped article.

4. The shaped article of any preceding claim, wherein the calcium hypochlorite is a hydrated calcium hypochlorite.

5. The shaped article of claim 4, wherein the hydrated calcium hypochlorite contains water in an amount of from 5% to 16% by weight, based on the total weight of the hydrated calcium hypochlorite.

6. The shaped article of any one of the preceding claims, wherein the calcium hypochlorite is a hydrated calcium hypochlorite, wherein the hydrated calcium hypochlorite contains water in an amount of from 5% to 16% by weight, based on the total weight of the hydrated calcium hypochlorite, and wherein the calcium hydroxide content in the shaped article is from 11% to 30% by weight, based on the total weight of the shaped article.

7. The shaped article according to any of the preceding claims, further comprising additives in amounts up about 30% by weight, based on the total weight of the shaped article.

8. The shaped article of claim 7, wherein the additive comprises magnesium sulfate, water soluble zinc salts or hydrates of zinc salts, scale inhibiting agent, pigments, dyes, binders, lubricants, color-containing salts and mixtures thereof.

9. The shaped article according to any of the preceding claims, in the form of tablets, bricks, briquettes, pellets, or an extrusion.

10. The shaped article according to any of the preceding claims, having a total weight between 1 and 500 grams.

11. A method of treating water, said method comprising
(i) providing a shaped article according to any one of the preceding claims; and
(ii) contacting the shaped article with water to be treated.

12. The method of claim 11, wherein the shaped article is contacted with the water to be treated by placing the shaped article in a skimmer of a swimming pool.

13. The method of claim 11, wherein the shaped article is contacted with the water to be treated by placing the shaped article in a chlorine feeder and the water to be treated is contacted with the shaped article within the chlorine feeder, or wherein the shaped article is contacted with the water to be treated by placing the shaped article in a floater which floats in the water to be treated, and water enters the floater to contact the shaped article.

14. A method of manufacturing the shaped article according to any one of claims 1 to 10, said method comprising dry blending calcium hypochlorite with calcium hydroxide to form a blend, and compressing the blend into the shaped article.

15. The method according to claim 14, wherein the hydrated calcium hypochlorite and the calcium hydroxide are each in form of free flowing particles.

## Patentansprüche

1. Calciumhypochlorit-Formkörper, der zum Desinfizieren von Wasser geeignet ist, wobei der Formkörper eine Mischung aus Calciumhypochlorit und Calciumhydroxid enthält, wobei der Gesamtgehalt an Calciumhydroxid in dem Formkörper mehr als 10 Gew.-%, bezogen auf das Gesamtgewicht des Formkörpers, beträgt.

2. Formkörper gemäß Anspruch 1, wobei der Calciumhydroxid-Gehalt in dem Formkörper größer als oder gleich 11 Gew.-%, bezogen auf das Gesamtgewicht des Formkörpers, ist.

3. Formkörper gemäß Anspruch 1 oder 2, wobei der Calciumhydroxid-Gehalt in dem Formkörper zwischen 11 und 30 Gew.-%, bezogen auf das Gesamtgewicht des Formkörpers, beträgt.

4. Formkörper gemäß einem der vorhergehenden Ansprüche, wobei das Calciumhypochlorit ein hydratisiertes Calciumhypochlorit ist.

5. Formkörper gemäß Anspruch 4, wobei das hydratisierte Calciumhypochlorit Wasser in einer Menge von 5 bis 16 Gew.-%, bezogen auf das Gesamtgewicht des hydratisierten Calciumhypochlorits, enthält.

6. Formkörper gemäß einem der vorhergehenden Ansprüche, wobei das Calciumhypochlorit ein hydratisiertes Calciumhypochlorit ist, wobei das hydratisierte Calciumhypochlorit Wasser in einer Menge von 5 bis 16 Gew.-%, bezogen auf das Gesamtgewicht des hydratisierten Calciumhypochlorits, enthält, und wobei der Calciumhydroxidgehalt in dem Formkörper 11 bis 30 Gew.-%, bezogen auf das Gesamtgewicht des Formkörpers, beträgt.

7. Formkörper gemäß einem der vorangehenden Ansprüche, der ferner Zusatzstoffe in Mengen bis zu etwa 30 Gew.-%, bezogen auf das Gesamtgewicht des Formkörpers, enthält.

8. Formkörper gemäß Anspruch 7, wobei der Zusatzstoff Magnesiumsulfat, wasserlösliche Zinksalze oder Hydrate von Zinksalzen, Kesselsteinhemmer, Pigmente, Farbstoffe, Bindemittel, Schmiermittel, farbhaltige Salze und Mischungen davon umfasst.

9. Formkörper gemäß einem der vorhergehenden Ansprüche, in Form von Tabletten, Ziegeln, Briketts, Pellets oder einer Extrusion.

10. Formkörper gemäß einem der vorangehenden Ansprüche mit einem Gesamtgewicht zwischen 1 und 500 Gramm.

11. Verfahren zur Behandlung von Wasser, wobei das Verfahren umfasst
(i) Bereitstellen eines Formkörpers gemäß einem der vorangehenden Ansprüche; und
(ii) Inkontaktbringen des Formkörpers mit dem zu behandelnden Wasser.

12. Verfahren gemäß Anspruch 11, wobei der Formkörper mit dem zu behandelnden Wasser in Berührung gebracht wird, indem der Formkörper in einem Skimmer eines Schwimmbeckens untergebracht wird.

13. Verfahren gemäß Anspruch 11, wobei der Formkörper mit dem zu behandelnden Wasser in Berührung gebracht wird, indem der Formkörper in einem Chlorspender untergebracht wird und das zu behandelnde Wasser mit dem Formkörper innerhalb des Chlorspenders in Berührung gebracht wird, oder wobei der Formkörper mit dem zu behandelnden Wasser in Berührung gebracht wird, indem der Formkörper in einem Schwimmer untergebracht wird, der in dem zu behandelnden Wasser schwimmt, und Wasser in den Schwimmer eintritt, um mit dem Formkörper in Berührung zu kommen.

14. Verfahren zur Herstellung des Formkörpers gemäß einem der Ansprüche 1 bis 10, wobei das Verfahren das Trockenmischen von Calciumhypochlorit mit Calciumhydroxid zur Bildung einer Mischung und das Pressen der Mischung in den Formkörper umfasst.

15. Verfahren gemäß Anspruch 14, wobei das hydratisierte Calciumhypochlorit und das Calciumhydroxid jeweils in Form von frei fließenden Teilchen vorliegen.

## Revendications

1. Article façonné en hypochlorite de calcium adapté pour désinfecter de l'eau, l'article façonné comprenant un mélange d'hypochlorite de calcium et d'hydroxyde de calcium, dans lequel la teneur totale en hydroxyde de calcium dans l'article façonné est supérieure à 10 % en poids, sur la base du poids total de l'article façonné.

2. Article façonné selon la revendication 1, dans lequel la teneur en hydroxyde de calcium dans l'article façonné est supérieure ou égale à 11 % en poids, sur la base du poids total de l'article façonné.

3. Article façonné selon les revendications 1 ou 2, dans lequel la teneur en hydroxyde de calcium dans l'article façonné est de 11 % à 30 % en poids, sur la base du poids total de l'article façonné.

4. Article façonné selon l'une quelconque des revendications précédentes, dans lequel l'hypochlorite de calcium est un hypochlorite de calcium hydraté.

5. Article façonné selon la revendication 4, dans lequel l'hypochlorite de calcium hydraté contient de l'eau en une quantité de 5 % à 16 % en poids, sur la base du poids total de l'hypochlorite de calcium hydraté.

6. Article façonné selon l'une quelconque des revendications précédentes, dans lequel l'hypochlorite de calcium est un hypochlorite de calcium hydraté, dans lequel l'hypochlorite de calcium hydraté contient de l'eau en une quantité de 5 % à 16 % en poids, sur la base du poids total de l'hypochlorite de calcium hydraté, et dans lequel la teneur en hydroxyde de calcium dans l'article façonné est de 11 % à 30 % en poids, sur la base du poids total de l'article façonné.

7. Article façonné selon l'une quelconque des revendications précédentes, comprenant en outre des additifs en des quantités jusqu'à environ 30 % en poids, sur la base du poids total de l'article façonné.

8. Article façonné selon la revendication 7, dans lequel l'additif comprend du sulfate de magnésium, des sels de zinc solubles dans l'eau ou des hydrates de sels de zinc, un agent inhibiteur de tartre, des pigments, des colorants, des liants, des lubrifiants, des sels colorants et des mélanges de ceux-ci.

9. Article façonné selon l'une quelconque des revendications précédentes, sous forme de comprimés, de briques, de briquettes, de pellets ou d'une extrusion.

10. Article façonné selon l'une quelconque des revendications précédentes, ayant un poids total compris entre 1 et 500 grammes.

11. Procédé de traitement d'eau, ledit procédé consistant à
(i) fournir un article façonné selon l'une quelconque des revendications précédentes ; et
(ii) mettre l'article façonné en contact avec de l'eau à traiter.

12. Procédé selon la revendication 11, dans lequel l'article façonné est mis en contact avec l'eau à traiter en plaçant l'article façonné dans une écumoire d'une piscine.

13. Procédé selon la revendication 11, dans lequel l'article façonné est mis en contact avec l'eau à traiter en plaçant l'article façonné dans un distributeur de chlore et l'eau à traiter est mise en contact avec l'article façonné au sein du distributeur de chlore, ou dans lequel l'article façonné est mis en contact avec l'eau à traiter en plaçant l'article façonné dans un flotteur qui flotte dans l'eau à traiter, et de l'eau pénètre dans le flotteur pour entrer en contact avec l'article façonné.

14. Procédé de fabrication de l'article façonné selon l'une quelconque des revendications 1 à 10, ledit procédé comprenant le mélange à sec d'hypochlorite de calcium avec de l'hydroxyde de calcium pour former un mélange, et la compression du mélange dans l'article façonné.

15. Procédé selon la revendication 14, dans lequel l'hypochlorite de calcium hydraté et l'hydroxyde de calcium sont chacun sous forme de particules s'écoulant librement.
